# EUROPÄISCHE PATENTANMELDUNG

(11) **EP 1 026 014 A2**
(43) Veröffentlichungstag der Anmeldung: **09.08.2000**
(21) Anmeldenummer: 00101052.9
(22) Anmeldetag: 20.01.2000
(51) Int. Cl.: B60C 23/00

(54) **Vorrichtung zum Befüllen von Fahrzeugreifen und Verfahren zum Abdichten und Befüllen von undichten Fahrzeugreifen**

(30) Priorität: 02.02.1999 DE 19904078
(71) Anmelder: Bayerische Motoren Werke Aktiengesellschaft, 80809 München (DE)
(72) Erfinder: Gentner, Hariolf, Dr., 81379 München (DE)

(57) **Zusammenfassung**

Vorrichtung zum Befüllen von Fahrzeugreifen und Verfahren zum Abdichten und Befüllen von undichten Fahrzeugreifen, gekennzeichnet daß in der Klimaanlage ein Systemdruck herrscht, der größer als der erforderliche Reifendruck ist, daß an der Klimaanlage eine Anschlußstelle für einen Verbindungsschlauch ausgebildet ist, daß die Vorrichtung mit einem Druckminderer und einem Druckmesser versehen ist und daß an einem von der Klimaanlage abgewandten Ende des Verbindungsschlauches ein Anschluß für das Reifenventil angeordnet ist.

## Beschreibung

Die Erfindung betrifft eine Vorrichtung zum Befüllen von Fahrzeugreifen gemäß dem Oberbegriff des Anspruchs 1 sowie ein Verfahren zum Abdichten und Befüllen von undichten Fahrzeugreifen gemäß dem Anspruch 5 unter Verwendung einer Vorrichtung nach den Ansprüchen 1 bis 4.

Es sind bereits Abdichtungsmittel für beschädigte Fahrzeugreifen bekannt, die in der Regel eine Kautschukemulsion enthalten. Diese Abdichtmittel bilden auf der Innenwandung eines damit befüllten Fahrzeugreifens eine Abdichtschicht. Damit der Fahrzeugreifen jedoch wieder fahrbereit ist, ist es erforderlich, den Fahrzeugreifen mit einem entsprechend hohen Gasdruck aufzupumpen. Dazu ist ein Kompressor nötig, der im Fahrzeug mitgeführt werden muß. Dies hat den Nachteil, daß der Kompressor das Fahrzeuggewicht erhöht sowie den im Fahrzeug zur Verfügung stehenden Stauraum verkleinert.

Aufgabe der Erfindung ist es, eine Vorrichtung zum Befüllen von Fahrzeugreifen zu schaffen, bei der die Gewichtszunahme und die Stauraumverringerung klein gehalten ist.

Diese Aufgabe wird durch die Merkmale des Anspruchs 1 gelöst.

Ferner ist es Aufgabe der Erfindung, ein Verfahren anzugeben, bei dem in einfacher Weise die Reparatur eines undichten Fahrzeugreifens möglich ist.

Diese Aufgabe wird durch die Merkmale des Anspruchs 5 gelöst.

Mit der erfindungsgemäßen Vorrichtung ist es möglich, das sich in einer Fahrzeugklimaanlage befindliche Kältemittel unter Abbau des in der Klimaanlage herrschenden Druckes in einen Fahrzeugreifen zu fördern. Damit kann der Innendruck eines Fahrzeugreifens jederzeit und unabhängig von Dritten auf einen gewünschten Wert eingestellt werden.

Nach dem erfindungsgemäßen Verfahren wird der Innenraum eines undichten Fahrzeugreifens durch ein Abdichtungsmittel abgedichtet und anschließend wird das im Fahrzeug befindliche Kältemittel in den Fahrzeugreifen gefördert, bis der Fahrzeugreifen den erforderlichen Druck aufweist.

Durch die erfindungsgemäße Vorrichtung und das erfindungsgemäße Verfahren ist es somit zur Behebung einer Reifenpanne lediglich erforderlich, ein Abdichtungsmittel sowie einen Verbindungsschlauch mit der erforderlichen Länge im Fahrzeug mitzuführen. Im Vergleich zu bekannten Maßnahmen zur Reparatur von undichten Reifen, wie z. B. Reserverädern oder separaten Kompressoren, ergibt sich durch die erfindungsgemäße Vorrichtung und das erfindungsgemäße Verfahren eine Gewichtseinsparung sowie ein größerer zur Verfügung stehender Stauraum im Kraftfahrzeug.

Bei der erfindungsgemäßen Vorrichtung weist die Klimaanlage eines Fahrzeuges eine Anschlußstelle auf, an der ein Verbindungsschlauch gasdicht anschließbar ist. Der Verbindungsschlauch ist mit einem Druckminderer oder einem Ventil und einem Druckmesser versehen. Zur leichteren Handhabung ist das Ventil und der Druckmesser an dem von der Klimaanlage abgewandten Ende des Verbindungsschlauches angeordnet. In einer anderen Ausführungsform kann das Ventil auch an dem zur Klimaanlage hingewandten Ende ausgebildet sein.

Liegt bei einem Fahrzeug eine Reifenpanne vor, so wird in den undichten Reifen zunächst ein Abdichtungsmittel eingefüllt. Das Abdichtungsmittel ist in der Regel eine Emulsion, die Kautschuk aufweist. Nachdem das Abdichtungsmittel ausreichend in dem Reifen ausgehärtet ist, wird das Kältemittel der Klimaanlage durch den in der Klimaanlage herrschenden Druck über den Verbindungsschlauch in den Reifen gefördert, bis der Reifen den erforderlichen Innendruck aufweist.

## Patentansprüche

1. Vorrichtung zum Befüllen von Fahrzeugreifen mit einem Gas, wobei der Fahrzeugreifen mit einem Reifenventil versehen ist und das Fahrzeug eine Klimaanlage mit einem Kompressor aufweist und die Klimaanlage mit einem Kältemittel gefüllt ist, dadurch gekennzeichnet, daß in der Klimaanlage ein Systemdruck herrscht, der größer als der erforderliche Reifendruck ist, daß an der Klimaanlage eine Anschlußstelle für einen Verbindungsschlauch ausgebildet ist, daß die Vorrichtung mit einem Druckminderer und einem Druckmesser versehen ist und daß an einem von der Klimaanlage abgewandten Ende des Verbindungsschlauches ein Anschluß für das Reifenventil angeordnet ist.

2. Vorrichtung nach Anspruch 1, dadurch gekennzeichnet, daß der Verbindungsschlauch an seinem zur Klimaanlage zugewandten Ende mit dem Druckminderer versehen ist.

3. Vorrichtung nach den Ansprüchen 1 oder 2, dadurch gekennzeichnet, daß das in der Klimaanlage befindliche Kältemittel verträglich mit einem zur Reparatur vorgesehenen Abdichtungsmittel ist.

4. Vorrichtung nach einem der vorhergehenden Ansprüche, dadurch gekennzeichnet, daß das Kältemittel Kohlendioxid ist.

5. Verfahren zum Abdichten und Befüllen von undichten Fahrzeugreifen unter Verwendung einer Vorrichtung nach den Ansprüchen 1 bis 4, dadurch gekennzeichnet, daß in den undichten Fahrzeugreifen ein Abdichtungsmittel eingefüllt wird, das eine Abdichtschicht an einer Innenwandung des Fahrzeugreifens bildet, daß der Verbindungsschlauch an den beschädigten Reifen angeschlossen wird und daß das Kältemittel der Klimaanlage über den in der Klimaanlage herrschenden Druck in den Reifen gefördert wird.
